# EUROPÄISCHE PATENTSCHRIFT

(11) **EP 2 136 947 B1**
(45) Veröffentlichungstag und Bekanntmachung des Hinweises auf die Patenterteilung: **08.11.2017**
(21) Anmeldenummer: 08715781.4
(22) Anmeldetag: 15.02.2008
(51) Int. Cl.: B23B 27/08, B23B 27/16

(54) **WENDESCHNEIDPLATTE**
INDEXABLE CUTTING INSERT
PLAQUETTE DE COUPE AMOVIBLE

(30) Priorität: 25.04.2007 DE 102007019463
(43) Veröffentlichungstag der Anmeldung: 30.12.2009
(73) Patentinhaber: Hartmetall-Werkzeugfabrik Paul Horn GmbH, 72072 Tübingen (DE)
(72) Erfinder: SCHÄFER, Hans, 72810 Gomaringen (DE); LANGER, Peter, 72108 Rottenburg (DE)
(74) Vertreter: Witte, Weller & Partner Patentanwälte mbB
(86) Internationale Anmeldenummer: PCT/EP2008/001149
(87) Internationale Veröffentlichungsnummer: WO 2008/131816

(56) Entgegenhaltungen:
- EP-A- 0 568 513
- AT-U1- 6 939
- DE-A1-102005 019 945
- DE-U1- 7 629 302
- DE-U1- 8 214 831
- JP-A- 2005 066 707
- US-A- 3 938 230
- US-B1- 6 249 950

## Beschreibung

Die Erfindung betrifft eine dreieckige Wendeschneidplatte gemäß dem Oberbegriff des Anspruchs 1. Gegenstand der Erfindung ist auch ein aus Werkzeughalter und Schneidwerkzeug bestehendes Werkzeugsystem.

Aus Werkzeughalter und Schneidwerkzeug bestehende Werkzeugsysteme sind bekannt und werden unter anderem als Stechdrehwerkzeuge eingesetzt. Die DE 26 44 068 C2 zeigt ein derartiges Stechdrehwerkzeug, bei dem als Schneidwerkzeug eine Wendeschneidplatte der eingangs genannten Art benutzt wird. Entsprechend diesem Stand der Technik weist der Halter zum Festlegen einer dreieckförmigen, flachen, hochkant stehenden Wendeschneidplatte eine Spannschraube auf, mittels deren eine Klemmpratze, die einen Randbereich an der Wendeschneidplatte übergreift, diese in einem Sitz des Halters festspannt. Um beim Festspannen der Wendeschneidplatte im Sitz die genaue Lagezentrierung zu begünstigen, sind die mit den spannenden Flächen am Halter zusammenwirkenden Anlageflächen in Teilflächen unterteilt, die in der Art eines Polygons angeordnet sind und eine Konturierung bilden, um eine großflächige Anlage in den die Spannkraft übertragenden Bereichen zu vermeiden.

Aus der US 6,249,950 B1 ist ein Werkzeug bekannt, bei dem die Wendeschneidplatte von einem austauschbaren Klemmelement niedergehalten wird, wobei das Klemmelement wiederum in einer Ausnehmung in dem Klemmhalter sitzt. Die dem Klemmelement zuweisende Anlagefläche der Wendeschneidplatte weist eine ballige Form mit mehreren Teilflächen auf, wobei die zentrale Teilfläche eine gekrümmte Fläche ist.

Aus der JP 2005-66707 ist ein Werkzeug mit einem Schneideinsatz bekannt, dessen Schaft in einer Ausnehmung im Halter aufgenommen wird. Der Schaft weist jeweils in Längsrichtung an seiner Ober- und Unterseite eine mittige Fläche auf und jeweils seitlich dazu eine schräge Teilfläche, die an entsprechenden Anlageflächen in der Ausnehmung des Halters anliegen.

Ähnliche Schneideinsätze sind auch in der DE 82 14 831 U1 und der EP 0 568 513 A1 beschrieben. Eine Wendeschneidplatte mit den Merkmalen des Oberbegriffs des Anspruchs 1 und ein Werkzeugsystem, das aus einem Werkzeughalter und einem Schneidwerkzeug besteht, wobei das Schneidwerkzeug als Wendeschneidplatte gemäß dem Oberbegriff des Anspruchs 1 konfiguriert ist, sind aus der
US 3, 938, 230 bekannt. Die Schneidplatte dieses Dokuments wird als nächstliegender Stand der Technik gegenüber der Wendeschneidplatte des Anspruchs 1 angesehen.

Der vorliegenden Erfindung liegt die Aufgabe zugrunde, eine Wendeschneidplatte zur Verfügung zu stellen, bei der die Formgebung der mit dem Sitz des Halters zusammenwirkenden Anlageflächen optimiert ist.

Erfindungsgemäß ist diese Aufgabe durch eine Wendeschneidplatte gelöst, die die Merkmale des Patentanspruchs 1 in seiner Gesamtheit aufweist.

Eine wesentliche Besonderheit der Erfindung besteht demgemäß darin, dass gegenüber dem Stand der Technik eine feinere Unterteilung der Anlageflächen vorgesehen ist, dergestalt, dass sich an den Anlageflächen eine einer Konvexität angenäherte Balligkeit ergibt. Aufgrund dieser Balligkeit ergibt sich zu einem der Vorteil, dass die Klemmkraft aufgrund der geringen Berührungsflächen mit hoher Flächenpressung erfolgt. Zum anderen läßt sich durch die Balligkeit sicherstellen, dass in Zusammenwirkung mit entsprechend leicht schrägstehenden Klemmflächen des Halters beim Festklemmen eine Querkomponente an der Wendeschneidplatte erzeugt wird, die diese beim Klemmvorgang selbsttätig in eine durch einen Formschluß definierte Sollposition bringt, die Wendeschneidplatte also sozusagen "zentriert".

Die drei Anlageflächen sind an der Wendeschneidplatte nicht nur einseitig ausgebildet, sondern die Anordnung ist so getroffen, dass in beiden von der Mittenebene ausgehenden Hälften des Schneidenkörpers je drei Kanten gebildet sind, so dass die Anlagefläche in fünf Teilflächen unterteilt ist, was zu einer besonders günstigen Balligkeit führt. Wenn bei bevorzugten Ausführungsbeispielen die drei Anlageflächen jeweils in beiden Hälften der Wendeschneidplatte gleichartig gestaltetsind, so dass die Wendeschneidplatte zur Mittenebene symmetrisch gestaltet ist, besteht die Möglichkeit des universelleren Einsatzes der Wendeschneidplatte in Verbindung mit unterschiedlich gestalteten Werkzeughaltern. Die Lösung ist in rechten und linken Klemmhaltern verwendbar.

Vorzugsweise sind die Anlageflächen so gestaltet, dass eine sich zu beiden Seiten der Mittenebene erstreckende zentrale Teilfläche jeder Anlagefläche eine zur Mittenebene senkrechte Ebene definiert. Dadurch erfolgt die Übertragung der Klemmkraft an der der Klemmpratze abgewandten Seite der Wendeschneidplatte vorrangig im Zentralbereich der Anlagefläche.

Vorzugsweise bilden die beidseits der zentralen Teilfläche gelegenen Teilflächen innere Nebenflächen und äußere Nebenflächen, die jeweils ebenfalls ebene Flächen sind, jedoch gegenüber der zentralen Teilfläche eine größere Breite besitzen, wobei die inneren Nebenflächen gegenüber der zentralen Teilfläche um einen ersten Neigungswinkel zurückgenommen sind und die äußeren Nebenflächen demgegenüber wiederum um einen größeren Neigungswinkel zurückgenommen sind, wobei die Neigungswinkel so gewählt sind, dass sich die optimale Balligkeit ergibt.

Gemäß dem Patentanspruch 10 ist Gegenstand der Erfindung auch ein aus Werkzeughalter und Schneidwerkzeug bestehendes Werkzeugsystem, wobei als Schneidwerkzeug eine Wendeschneidplatte gemäß einem der Patentansprüche 1 bis 9 vorgesehen ist.

Nachstehend ist die Erfindung anhand eines in der Zeichnung dargestellten Ausführungsbeispiels im Einzelnen erläutert. Es zeigen:
- Fig. 1: eine gegenüber einer praktischen Ausführungsform geringfügig vergrößert gezeichnete Seitenansicht eines Werkzeugsystems mit einem Ausführungsbeispiel einer erfindungsgemäßen Wendeschneidplatte;
- Fig.2: einen gegenüber Fig.1 vergrößert gezeichneten Teilquerschnitt entsprechend der Schnittlinie II - II von Fig.1;
- Fig.3 und 4: gegenüber Fig.2 stark vergrößert gezeichnete Teilquerschnitte der in Fig.2 mit III bzw. IV bezeichneten Bereiche;
- Fig.5: eine gegenüber einer praktischen Ausführungsform etwa 5-fach vergrößert gezeichnete Seitenansicht des Ausführungsbeispiels der Wendeschneidplatte;
- Fig.6: einen gegenüber Fig.3 und 4 noch stärker vergrößert gezeichneten Teilquerschnitt lediglich des an eine Anlagefläche angrenzenden Randbereichs der Wendeschneidplatte, wobei die Lage der Schnittebene in Fig.5 mit einer Linie VI - VI angedeutet ist, und
- Fig.7: eine ebenfalls übertrieben groß gezeichnete Teildraufsicht der Wendeschneidplatte, gesehen mit Blickrichtung gemäß Pfeil A von Fig.5.

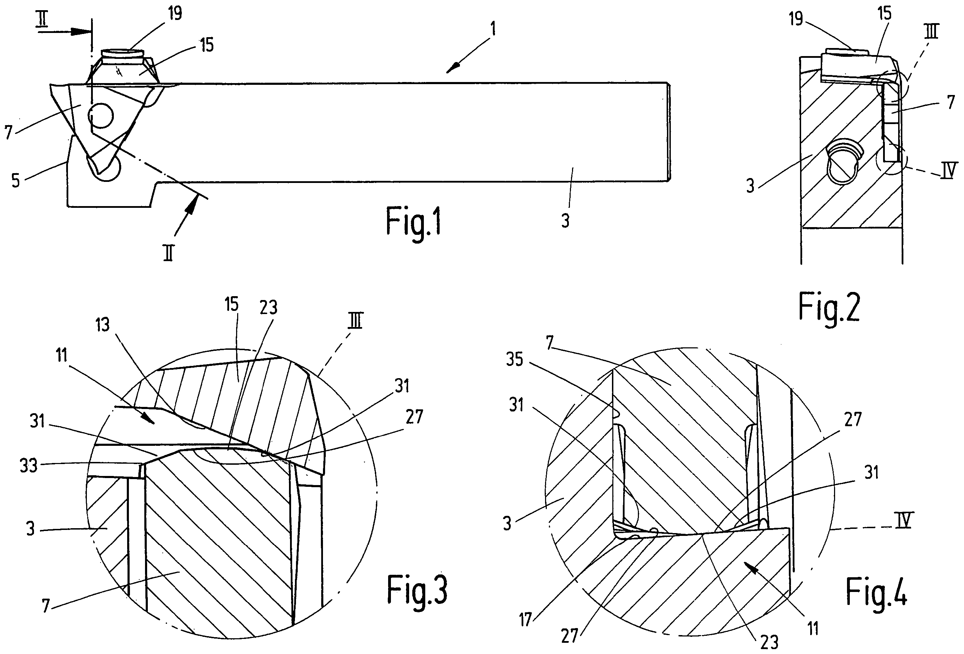

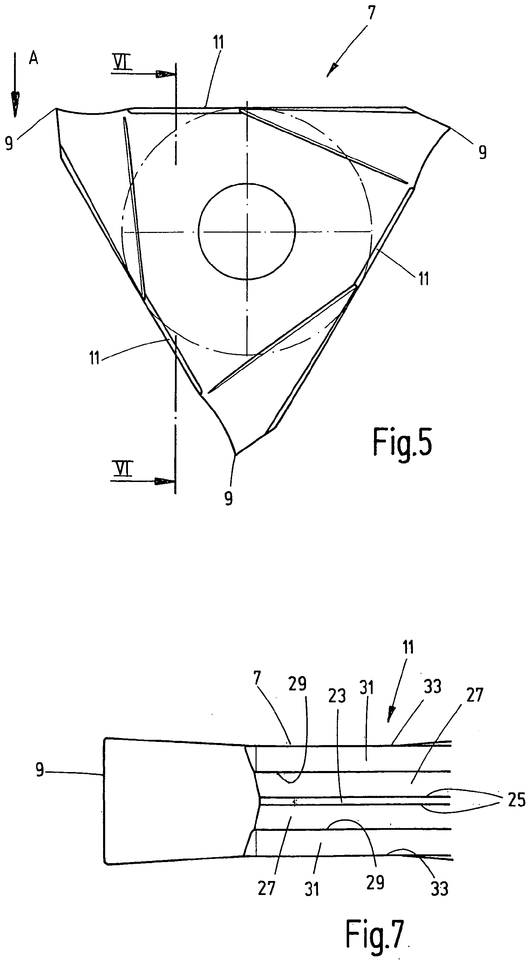

Ein in Fig.1 mit 1 bezeichneter Halter weist einen Schaft 3 quadratischen Querschnitts auf. An seinem vorderen Ende 5 weist der Halter 1 einen Sitz für eine Wendeschneidplatte 7 auf, die einen flachen, scheibenartigen Körper bildet, der, wie am besten aus Fig. 5 zu ersehen ist, dreieckförmig gestaltet und aus einem Hartmetallwerkstoff hergestellt ist. In einem Längenbereich zwischen den drei Schneiden 9 ist an der Wendeschneidplatte 7 jeweils eine Anlagefläche 11 ausgebildet, die zur Festlegung der Schneidplatte 7 am Halter 1 mit Spannflächen am Halter 1 zusammenwirken. Wie Fig.1 bis 4 zeigen, handelt es sich bei diesen Spannflächen um eine Schrägfläche 13 an einer Klemmpratze 15 und um Gegenflächen am Halter 3, von denen in Fig.4 eine sichtbar und mit 17 bezeichnet ist. Die Klemmpratze 15 ist mittels einer Spannschraube 19 gegen die zugehörige Anlagefläche 11 der Schneidplatte 7 spannbar, wobei, wie am deutlichsten aus Fig.3 zu ersehen ist, die Schrägfläche 13 auf die zugeordnete Anlagefläche 11 die Klemmkraft überträgt, durch die die gegenüberliegenden Anlageflächen 11 an die entsprechenden Gegenflächen 17 des Sitzes am Schaft 3 angepreßt werden, siehe insbes. Fig.3 und 4.

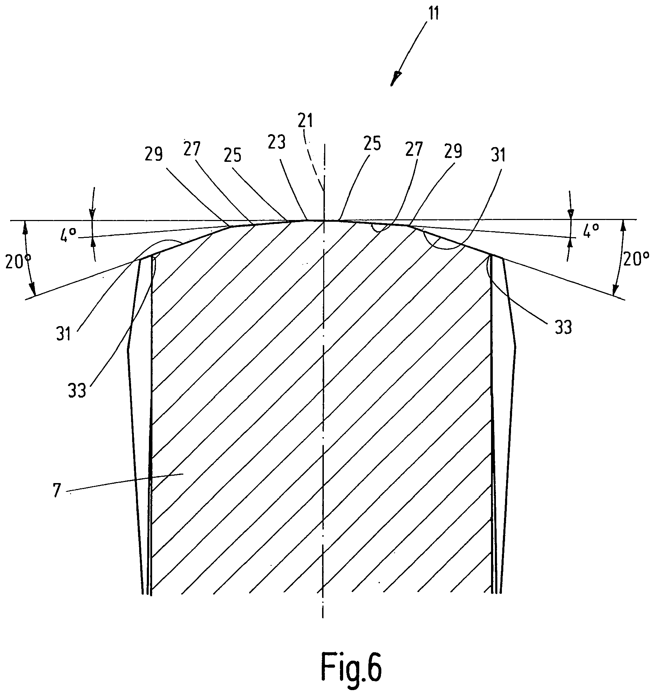

Wie am deutlichsten aus Fig.6 und 7 entnehmbar ist, sind die Anlageflächen 11 jeweils in ebene Teilflächen unterteilt, nämlich in eine, bezogen auf die Mittenebene 21 (Fig.6) der Schneidplatte 7, mittig gelegene, zentrale Teilfläche 23, die sich zu beiden Seiten der Mittenebene 21 erstreckt. Die zentrale Teilfläche 23 ist durch Kanten 25 begrenzt, an die sich weitere Teilflächen in Form innerer Nebenflächen 27 anschließen, die außenseitig wiederum durch Kanten 29 begrenzt sind, an die sich äußere Nebenflächen 31 anschließen.

Wie am besten aus Fig.6 erkennbar ist, liegt die zentrale Teilfläche 23 in einer zur Mittenebene 21 senkrechten Ebene. Die sich anschließenden, ebenen inneren Teilflächen 27 sind gegenüber der zentralen Teilfläche 23 um einen ersten Neigungswinkel zurückgenommen, der beim vorliegenden Beispiel vier Winkelgrad beträgt. Die sich weiter außen anschließenden äußeren Nebenflächen 31, die sich von den Kanten 29 bis zu den Außenkanten 31 des Schneidkörpers 7 erstrecken, sind wiederum um einen weiteren, zweiten Neigungswinkel zurückgenommen, der größer als der erste Neigungswinkel ist und beim vorliegenden Beispiel 20 Winkelgrad beträgt. Die die Teilflächen begrenzenden Kanten 25, 29 und 33 bilden somit ein Polygon, wobei sich bei den gewählten Neigungswinkeln eine einer konvexen Balligkeit angenäherte Kontur der Anlageflächen 11 bildet.

Wie insbesondere Fig.7 zeigt, hat die zentrale Teilfläche 23 die geringste Breite der Teilflächen, die etwa einem Drittel der Breite der inneren Nebenflächen 27 und der äußeren Nebenflächen 31 entspricht.

Bei dieser Geometrie der zusammenwirkenden, spannenden Flächen kommt es beim Spannvorgang zu einer verhältnismäßig kleinflächigen Berührung der zentralen Teilflächen 23 der Schneidplatte 7 mit den zugeordneten Gegenflächen 17 am Sitz des Halters 1. Darüber hinaus führt die Zusammenwirkung der Schrägfläche 13 der Klemmpratze 15 mit der zugekehrten äußeren Nebenfläche 31 der Schneidplatte 7 zu einer quer zur Wirkungslinie der Klemmkraft wirksamen Kraftkomponente, die die Schneidplatte 7 beim Spannvorgang, bei Blickrichtung entsprechend Fig. 3 und 4, nach links zur formschlüssigen Anlage an eine seitliche Begrenzungsfläche 35 (s. Fig.4) am Sitz im Schaft 3 des Halters 1 drängt. Dies begünstigt das Erreichen einer Sollposition der Schneidplatte 7 im Sitz während des Spannvorganges. Dank der Balligkeit der Kontur der Anlageflächen 11 kommt dieser Effekt noch stärker zum Tragen, wenn die in Fig.4 mit 17 bezeichnete Gegenfläche, an die die Schneidplatte 7 durch die Kraft der Klemmpratze 15 angedrückt wird, zu der Begrenzungsfläche 35 nicht senkrecht verläuft, sondern mit einem geringen Neigungswinkel, beispielsweise etwa 4°, gegen die Begrenzungsfläche 35 hin geneigt, d.h. vertieft, verläuft.

## Patentansprüche

1. Wendeschneidplatte (7), die dreieckförmig ist, drei Schneiden aufweist und zum Festlegen an einem Halter (1) mit drei identisch ausgestalteten Anlageflächen (11) versehen ist, wobei zwischen jeweils zwei der drei Schneiden (9) jeweils eine der drei Anlageflächen (11) angeordnet ist, wobei die drei Anlageflächen (11) jeweils in einzelne Teilflächen (23,27,31) unterteilt sind,
**dadurch gekennzeichnet, dass** jede der drei Anlageflächen (11) bezogen auf eine Mittenebene (21) der Wendeschneidplatte (7), in einer Hälfte der jeweiligen Anlagefläche (11) mindestens drei Kanten (25,29,33) bildet, die die Teilflächen (23,27,31) zur Bildung einer Konvexität angenäherten Balligkeit der jeweiligen Anlagefläche (11) begrenzen, wobei die drei Anlageflächen (11) jeweils in beiden, von der Mittenebene (21) ausgehenden Hälften der Wendeschneidplatte (7) durch je drei Kanten (25,29,33) begrenzt sind, sodass die drei Anlageflächen (11) der Wendeschneidplatte (7) jeweils in fünf Teilflächen (23,27,31) unterteilt sind.

2. Wendeschneidplatte nach Anspruch 1, **dadurch gekennzeichnet, dass** die drei Anlageflächen (11) jeweils in beiden Hälften der Wendeschneidplatte (7) gleichartig gestaltet ist.

3. Wendeschneidplatte nach Anspruch 2, **dadurch gekennzeichnet, dass** eine sich zu beiden Seiten der Mittenebene (21) erstreckende zentrale Teilfläche (23) jeder Anlagefläche (11) eine zur Mittenebene (21) senkrechte Ebene definiert.

4. Wendeschneidplatte nach Anspruch 3, **dadurch gekennzeichnet, dass** sich an die zentrale Teilfläche (23) beidseits jeweils ebene Teilflächen anschließen, die innere Nebenflächen (27) bilden, die breiter als die zentrale Teilfläche (23) sind und gegenüber dieser jeweils um einen ersten Neigungswinkel zurückgenommen sind.

5. Wendeschneidplatte nach Anspruch 4, **dadurch gekennzeichnet, dass** sich an die inneren Nebenflächen (27) als weitere Teilflächen jeweils ebene äußere Nebenflächen (31) anschließen, die gegenüber der zentralen Teilfläche (23) derselben Anlagefläche (11) jeweils um einen zweiten Neigungswinkel zurückgenommen sind,

6. Wendeschneidplatte nach Anspruch 5, **dadurch gekennzeichnet, dass** der Winkelbetrag des zweiten Neigungswinkels ein Mehrfaches des Winkelbetrages des ersten Neigungswinkels beträgt.

7. Wendeschneidplatte nach Anspruch 6, **dadurch gekennzeichnet, dass** der zweite Neigungswinkel etwa fünfmal größer ist als der erste Neigungswinkel.

8. Wendeschneidplatte nach Anspruch 4, **dadurch gekennzeichnet, dass** der erste Neigungswinkel etwa 4° beträgt.

9. Wendeschneidplatte nach Anspruch 5, **dadurch gekennzeichnet, dass** innere und äußere Nebenflächen (27,31) in etwa die gleiche Breite besitzen, die etwa dem Dreifachen der Breite der zentralen Teilfläche (23) entspricht.

10. Werkzeugsystem aus Werkzeughalter und Schneidwerkzeug, **gekennzeichnet durch** eine Wendeschneidplatte (7) gemäß einem der Ansprüche 1 bis 9.

11. Werkzeugsystem nach Anspruch 10, **gekennzeichnet durch** einen Halter (1) und eine an dem Halter (1) angebrachte Klemmpratze (15), wobei die Klemmpratze eine der Wendeschneidplatte (7) zuweisende Schrägfläche (13) aufweist, die auf eine äußerste Teilfläche (31) der Wendeschneidplatte eine Klemmkraft ausübt.

12. Werkzeugsystem nach Anspruch 10 oder 11, **dadurch gekennzeichnet, dass** die Wendeschneidplatte (7) zumindest zwei identische Anlageflächen aufweist und in einem am Halter (1) vorgesehenen Sitz derart angeordnet ist, dass eine zweitäußerste Teilfläche (27) einer Anlagefläche (11) an eine Gegenfläche (17) im Sitz angedrückt wird.

13. Werkzeugsystem nach Anspruch 12, **dadurch gekennzeichnet, dass** die Gegenfläche (17) um einen von 90° geringfügig verschiedenen Winkel gegenüber einer seitlichen Bezugsfläche (35) des Sitzes verläuft.

## Claims

1. A cutting insert (7) which is triangular, comprises three cutting edges and is provided with three identically shaped bearing surfaces (11) for securing to a holder (1), wherein always one of the three bearing surfaces (11) is arranged between two of the three cutting edges (9), wherein each of the three bearing surfaces (11) is subdivided into individual subsurfaces (23, 27, 31),
**characterized in that** each of the three bearing surfaces (11) forms with respect to a center plane (21) of the cutting insert (7) in one half of the respective bearing surface (11) at least three edges (25, 29, 33), which delimit the subsurfaces (23, 27, 31) for the formation of a crowning, approximating to convexity, of the respective bearing surface (11), wherein each of the three bearing surfaces (11) is bounded by three respective edges (25, 29, 33) in both halves of the cutting insert (7) with respect to the center plane (21), such that each of the three bearing surfaces (11) of the cutting insert (7) is subdivided into five subsurfaces (23, 27, 31).

2. The cutting insert according to claim 1, **characterized in that** the three bearing surfaces (11) are of identical configuration in both halves of the cutting insert (7).

3. The cutting insert according to claim 2, **characterized in that** a central subsurface (23) of each bearing surface (11), said subsurface (23) extending to both sides of the center plane (21), defines a plane perpendicular to the center plane (21).

4. The cutting insert according to claim 3, **characterized in that** planar subsurfaces adjoin each central subsurface (23) on both sides, said planar subsurfaces (23) forming inner secondary surfaces (27) which are wider than the central subsurface (23) and are set back relative to the latter in each case by a first angle of inclination.

5. The cutting insert according to claim 4, **characterized in that** planar outer secondary surfaces (31) adjoin, as further subsurfaces, each of the inner secondary surfaces (27), each of said planar outer secondary surfaces (31) being set back relative to the central subsurface (23) of the same bearing surface (11) by a second angle of inclination.

6. The cutting insert according to claim 5, **characterized in that** the magnitude of the second angle of inclination is a multiple of the magnitude of the first angle of inclination.

7. The cutting insert according to claim 6, **characterized in that** the second angle of inclination is about five times larger than the first angle of inclination.

8. The cutting insert according to claim 4, **characterized in that** the first angle of inclination is about 4°.

9. The cutting insert according to claim 5, **characterized in that** the inner and outer secondary surfaces (27, 31) have approximately the same width, which corresponds to about three times the width of the central subsurface (23).

10. A tool system having a tool holder and a cutting tool, **characterized by** a cutting insert (7) according to one of claims 1 to 9.

11. The tool system according to claim 10, **characterized by** a holder (1) and a clamping shoe (15) which is arranged at the holder (1), wherein the clamping shoe comprises a sloping surface (13) which is directed at the cutting insert (7), the sloping surface (13) exerting a clamping force onto an outermost subsurface (31) of the cutting insert.

12. The tool system according to claim 10 or 11, **characterized in that** the cutting insert (7) comprises at least two identical bearing surfaces and is arranged in a seat provided at the holder (1) in such a way that a second outermost subsurface (27) of a bearing surface (11) is pressed against a corresponding mating surface (17) in the seat.

13. The tool system according to claim 12, **characterized in that** the mating surface (17) is inclined at an angle of slightly different than 90° with respect to a peripheral datum surface (35) of the seat.

## Revendications

1. Plaquette de coupe amovible (7) de forme triangulaire, présentant trois arêtes de coupe et, pour la fixation à un support (1) munie de trois surfaces d'appui configurées de manière identique (11), l'une des trois surfaces d'appui (11) étant disposée à chaque fois entre deux des trois arêtes de coupe (9), les trois surfaces d'appui (11) étant à chaque fois divisées en surfaces partielles individuelles (23, 27, 31),
**caractérisée en ce que** chacune des trois surfaces d'appui (11) forme, par rapport à un plan médian (21) de la plaquette de coupe amovible (7), dans une moitié de la surface d'appui respective (11), au moins trois bords (25, 29, 33) qui délimitent les surfaces partielles (23, 27, 31) pour former un bombement quasi convexe de la surface d'appui respective (11), les trois surfaces d'appui (11) étant à chaque fois limitées dans deux moitiés de la plaquette de coupe amovible (7) à partir du plan médian (21) par trois bords respectifs (25, 29, 33), de telle sorte que les trois surfaces d'appui (11) de la plaquette de coupe amovible (7) soient à chaque fois divisées en cinq surfaces partielles (23, 27, 31).

2. Plaquette de coupe amovible selon la revendication 1, **caractérisée en ce que** les trois surfaces d'appui (11) sont configurées de manière identique dans les deux moitiés de la plaquette de coupe amovible (7).

3. Plaquette de coupe amovible selon la revendication 2, **caractérisée en ce qu'**une surface partielle centrale (23) s'étendant vers les deux côtés du plan médian (21) de chaque surface d'appui (11) définit un plan perpendiculaire au plan médian (21).

4. Plaquette de coupe amovible selon la revendication 3, **caractérisée en ce que** des surfaces partielles plane se raccordent à chaque fois de chaque côté à la surface partielle centrale (23), lesquelles forment des surfaces auxiliaires intérieures (27) qui sont plus larges que la surface partielle centrale (23) et qui sont en retrait par rapport à celle-ci à chaque fois suivant un premier angle d'inclinaison.

5. Plaquette de coupe amovible selon la revendication 4, **caractérisée en ce que** des surfaces auxiliaires extérieures planes (31) se raccordent à chaque fois aux surfaces auxiliaires intérieures (27) en tant que surfaces partielles supplémentaires, qui sont en retrait à chaque fois suivant un deuxième angle d'inclinaison par rapport à la surface partielle centrale (23) de la même surface d'appui (11).

6. Plaquette de coupe amovible selon la revendication 5, **caractérisée en ce que** la valeur angulaire du deuxième angle d'inclinaison est un multiple de la valeur angulaire du premier angle d'inclinaison.

7. Plaquette de coupe amovible selon la revendication 6, **caractérisée en ce que** le deuxième angle d'inclinaison est approximativement cinq fois plus grand que le premier angle d'inclinaison.

8. Plaquette de coupe amovible selon la revendication 4, **caractérisée en ce que** le premier angle d'inclinaison vaut environ 4°.

9. Plaquette de coupe amovible selon la revendication 5, **caractérisée en ce que** des surfaces auxiliaires intérieures et extérieures (27, 31) possèdent approximativement la même largeur, qui correspond approximativement au triple de la largeur de la surface partielle centrale (23).

10. Système d'outil constitué d'un support d'outil et d'un outil de coupe, **caractérisé par** une plaquette de coupe amovible (7) selon l'une quelconque des revendications 1 à 9.

11. Système d'outil selon la revendication 10, **caractérisé par** un support (1) et une bride de serrage (15) montée sur le support (1), la bride de serrage présentant une surface oblique (13) tournée vers la plaquette de coupe amovible (7), qui exerce une force de serrage sur une surface partielle la plus extérieure (31) de la plaquette de coupe amovible.

12. Système d'outil selon la revendication 10 ou 11, **caractérisé en ce que** la plaquette de coupe amovible (7) présente au moins deux surfaces d'appui identiques et est disposée dans un siège prévu sur le support (1) de telle sorte qu'une surface partielle (27) située derrière la surface partielle la plus extérieure d'une surface d'appui (11) soit pressée dans le siège contre une surface conjuguée (17).

13. Système d'outil selon la revendication 12, **caractérisé en ce que** la surface conjuguée (17) s'étend suivant un angle légèrement différent de 90° par rapport à une surface de référence latérale (35) du siège.
